(19) Europäisches Patentamt

European Patent Office

Office européen des brevets

(11) **EP 0 889 928 B1**

(12) **EUROPEAN PATENT SPECIFICATION**

(45) Date of publication and mention
of the grant of the patent:
**08.03.2000 Bulletin 2000/10**

(51) Int Cl.[7]: **C08J 9/24**, C08J 3/03,
B01D 67/00, B01D 71/36,
B01D 39/16, B01D 39/08

(21) Application number: **97915569.4**

(22) Date of filing: **01.04.1997**

(86) International application number:
**PCT/GB97/00919**

(87) International publication number:
**WO 97/36952 (09.10.1997 Gazette 1997/43)**

(54) **GRANULAR-TYPE POLYTETRAFLUOROETHYLENE DISPERSIONS AND FUSED ARTICLES PREPARED THEREFROM**

KÖRNIGE POLYTETRAFLUORETHYLEN DISPERSIONEN UND DARAUS HERGESTELLTE GESCHMOLZENE ARTIKEL

DISPERSIONS ET ARTICLES FONDUS EN POLYTETRAFLUOROETHYLENE DE TYPE GRANULEUX

(84) Designated Contracting States:
**DE FR GB IT SE**

(30) Priority: **30.03.1996 GB 9606818**

(43) Date of publication of application:
**13.01.1999 Bulletin 1999/02**

(73) Proprietors:
• **W.L. GORE & ASSOCIATES (UK) LTD**
**London WC2A 2JP (GB)**
• **W.L. GORE & ASSOCIATES, INC.**
**Newark, Delaware 19714-9206 (US)**

(72) Inventors:
• **CLOUGH, Norman, Ernest**
**Biggar, Lanarkshire ML12 6 ER (GB)**
• **BACINO, John, Edward**
**Avondale, PA 19311 (US)**
• **ALLAN, Andrew, Miller**
**Blairgowrie PH10 6UD (GB)**

(74) Representative: **Horner, Martin Grenville et al**
**Cruikshank & Fairweather**
**19 Royal Exchange Square**
**Glasgow G1 3AE Scotland (GB)**

(56) References cited:
EP-A- 0 369 466        EP-A- 0 521 588
US-A- 3 855 191        US-A- 4 882 113

• DATABASE WPI Section Ch, Derwent
Publications Ltd., London, GB; Class A88, AN
73-66422U XP002035648 & JP 48 056 580 A
(YUASA BATTERY CO LTD)

EP 0 889 928 B1

**Description**

**FIELD OF THE INVENTION**

This invention relates to porous polytetrafluoroethylene (PTFE hereinafter) materials formed by fusion of granular-type PTFE resin particles thus creating a loose or open interconnection of fused particles.

**BACKGROUND OF THE INVENTION**

Porous PTFE articles have been produced by fusing PTFE resin particles together through application of heat at a temperature above the melt (or sinter) temperature of the PTFE.

For example, GB 2 242 431 B to Allan, et al. (W. L. Gore & Associates, Ltd.), describes a sintered porous PTFE structure used as a filter to filter solids or gases from liquids. The porous structures are formed by fusing together particles of granular-type PTFE to form an integral network of void spaces between the particles. The pores are created by the void space between the particles and results in tortuous paths of voids through the article. Because of the small pore size and the chemical inertness of the PTFE, these structures are useful as filters, fuel cell electrodes, photocopy webs or rolls, and the like. However, these structures tend to have weak inter-particle connections and are not as strong as needed for some applications.

U.S. Patent 5,154,866 to Honda (Daikin), describes preparation of porous PTFE articles of sintered granular PTFE and fine powder PTFE used as filters for filtering out small particulate. The preparation comprises the steps of. first gelling a PTFE powder prepared by suspension polymerization (which to one skilled in the art identifies the PTFE as granular-type PTFE) at a temperature not lower than the melting point of PTFE. Next the PTFE is pulverized and mixed with an aqueous dispersion of PTFE fine powder prepared by emulsion polymerization. The solids are then coagulated, ram extruded, and baked by heating above the melting point of the PTFE. The gelled PTFE particles are hard and resist compaction. This results in relatively large size pores and the articles are useful mostly for separating out relatively large size particulate.

U.S. Patent 3,855,191 to Doughty, et al. (DuPont Co.) describes a modified granular-type PTFE in which the modification is in use of a modifier monomer which enters into the polymer chain to modify the homopolymer structure without changing the well known nonmelt processible characteristics of the polymer.

**SUMMARY OF THE INVENTION**

In this invention, strong porous PTFE articles are obtained that are useful as filters in filtration or in the metered dispensing of liquids, as for example in photocopying and in photocopier rolls or webs and in fuel cell electrodes.

The novel porous PTFE articles of the invention are prepared from a novel aqueous dispersion of the invention, in which particles of at least one non-melt-processible granular-type PTFE homopolymer are present in the dispersion along with a small amount of particles of modified fine powder-type PTFE. A coating of the aqueous dispersion is layed down on a substrate, followed by heating to drive off the aqueous liquid and other volatiles, and to fuse together the particles into an open network of fused particles that define a tortuous network of interconnected voids through the article between the fused interconnected particles. Thus, the porosity is not due to stretching or expanding of PTFE as is the case in some unrelated PTFEs. On the contrary the particles are non-expanded.

Thus, the product aspect of the invention is two-fold. In one aspect, the product is the fused porous sheet of particles which form a network of fused interconnected particles. In the other aspect the product is the aqueous dispersion from which the fused porous sheet is prepared.

It has surprisingly been found that when small amounts of the modified fine powder-type PTFE particles are added to the granular-type PTFE in the aqueous dispersions, the resulting fused sheets are stronger than when no modified fine powder-type PTFE is present.

Other aspects and variants of the invention will become evident in the ensuing discussion.

**DETAILED DESCRIPTION OF THE INVENTION**

By the term, "granular-type PTFE", is meant that type of non-melt-processible PTFE resin produced by the suspension polymerisation technique. This technique produces a molding resin that can be ram extruded. The term "granular" is a term of art in the PTFE field and refers to the method by which the polymer is made. It has no relationship to particle size.

By the term "fine powder-type PTFE" is meant that type of non-melt-processible PTFE resin that is produced by the aqueous dispersion polymerization technique. This term is also a term of art and refers to the method by which the resin is made. These definitions will be elaborated on below.

By the term "modified fine powder-type PTFE" is meant that the non-melt-processible fine powder polymer is not PTFE homopolymer but is a copolymer in which the homopolymer has been modified by copolymerisation with a copolymerisable ethylenically unsaturated comonomer in a small amount of less than 2%, preferably less than 1%, by weight of copolymer. These copolymers have been called "modified" PTFE by those skilled in the art, because presence of comonomer units does not change the basic nonmelt processable character of homopolymer PTFE. Thus, the term "modified' is used to connote that the good toughness, heat resistance and high temperature stability of the homopolymer is not altered when the homopolymer chain is interrupted by smaller trace units of the comonomer. The recurring comonomer units are ordinarily used to improve creep resistance. Examples of comonomers include olefins such as ethylene and propylene; halogenated olefins such as hexafluoropropylene (HFP), vinylidene fluoride and chlorofluoroethylene; or perfluoroalkyl vinyl ethers such as perfluoropropyl vinyl ether (PPVE). Preferably the comonomer is HFP or PPVE.

It is critical that modified fine powder-type PTFE is used herein. The greater strength in the resulting fused products over those products that do not contain the modified fine powder is surprising.

The aqueous dispersion described above can be used to form a coating or a web which can then be baked to obtain the novel fused composition. The particles of PTFE when fused, or sintered, together at certain contact points provide an integral network of interconnected particles which define a tortuous network of interconnected voids through the compositions.

The several types of PTFE used herein are available from several sources, such as the DuPont Co., ICI, and Daikin. As is well known, PTFE is produced by at least two distinct procedures which result in two distinct products which have acquired recognition in the art as being two distinct classes of chemicals. In one process, little or no dispersing agent is employed and vigorous agitation is used to produce a coagulated resin that has acquired the designation "granular PTFE resin" in the art. In the second procedure, a fluorinated surfactant is employed and agitation is very mild, producing small spherical particles dispersed in the aqueous medium. In the latter process, coagulation of the dispersion is avoided until after polymerization is completed. This type has acquired the designation "fine powder" dispersion in the art. Subsequent precipitation of the particles produces fine powder resins which are converted to finished products by paste extrusion.

The granular resins consist of stringy, irregularly shaped particles, which can exceed a millimeter in size. The "as-polymerized" granular polymer cannot be used as such, but must be cut to uniform particle size to provide sinterability. Shaped products are made only by ram extrusion of the resin.

The fine powder resins are produced by polymerizing TFE in the presence of a dispersing agent and thus the process resembles emulsion polymerization. The polymer is highly crystalline. The average particle size in dispersion is about 0.2 μm. The fine powder resins cannot be ram extruded, but instead can only be paste extruded by first mixing them with a lubricant.

When the granular PTFE resin and the modified fine powder PTFE resin are dispersed in an aqueous dispersion, the dispersion can be sprayed or cast onto a surface to form a coating. After removal of the water and other volatiles by drying, and after heating to sinter or fuse the particles, the fused (or sintered) product of the invention is obtained.

The coating formed is ordinarily about 50-2000 micrometers thick, but usually is 150-1500 micrometers.

One or more grades of granular PTFE may be employed. The granular PTFE can be mixed with modified granular PTFE where the modifiying comonomer is, for example, hexafluoropropylene, and another polymer in which the modifying monomer is, for example, perfluoropropyl vinyl ether in any desired amounts. The granular resin can also be either unsintered or presintered or a mixture of both as added to the aqueous dispersion. Use of unsintered resin tends to produce stronger fused products since the unsintered particles are soft and tend to pack to form a strong porous web having small pore sizes when sintered.

On the other hand, if the starting granular PTFE is presintered, the particles are harder and less compactible. When fused, the interparticle connection is less strong and larger pores are formed.

Modified Granular PTFE copolymer is commercially unavailable in its sintered form. Where sintred modified copolymer is required this may be produced by subjecting the unsintered modified copolymer particles to a preliminary sintering step, and if necessary breaking down the sintred modified copolymer into particles of the required size again.

When mixtures of sintered and unsintered granulars are used, it is believed that the softer, unsintered particles form fibrillar rod-like moieties which link the harder sintered particles to provide increased interparticle connection strengths.

The resin particles of granular PTFE in aqueous dispersion should have an average particle size in the range of 1-600 micrometers, and preferably 10-300 micrometers.

Particles of an organic or inorganic filler materials may also be included in the aqueous dispersion. Examples of fillers include carbon, activated carbon, glass, chromium oxide, titanium oxide, chopped expanded PTFE, silica dioxide, PEEK, polyimide and the like. A large variety of fillers can be employed to add specific properties to the final fused composition. The amount of filler can be as high as 60% or more based on weight of composition, but ordinarily is less than 50%, and preferably less than 40%.

The granular resin or mixtures of resins, is dispersed in water, along with the fine powder resin in the presence of any suitable surfactant, thickening agent. Amount of granular resin present can vary over a wide range. Preferably 30-70 weight percent resin solids will be present. The amount of modified fine powder-type resin in the dispersion will be between 3% and 30% by weight of solid and preferably between 5% and 20%. The aqueous dispersion is then coated on a substrate, such as by spraying, dipping, or casting. The substrate can be a release type substrate from which the subsequently baked or sintered product is peeled away to obtain a self-supporting film or membrane. The substrate can be a supporting mesh that forms an integral part with the sintered product.

The liquid-wet coating is then dried and baked at elevated temperatures. A preliminary step may involve heating somewhat slowly to 100°C in order to drive off water and any other volatiles, and holding at that temperature for a short period of time. Thereafter, the temperature is ordinarily raised progressively up to 330 to 385°C (e.g. 340 to 370°C) in order to allow sintering and fusion of the granular and modified fine powder particles.

One particular embodiment of the present invention employs unsintered PTFE material; however mixtures of sintered and unsintered granular PTFE may also be used in other embodiments. Teflon® granular-type PTFE resin grades 7A (unsintered) and 9B (sintered) are available from E. I. DuPont de Nemours & Co., Inc., Specialty Polymers Division, Wilmington, Delaware, U.S.A. In one preferred embodiment, the fused non-expanded porous PTFE of the invention may be produced from 0-100% unsintered PTFE (e.g. grade 7A) and conversely 100-0% sintered PTFE (e. g. grade 9B). Where the sintered porous PTFE is formed from a mixture of sintered and unsintered granular-type PTFE particles, it is preferred that the unsintered PTFE predominate since this leads to a material having good strength. The inclusion of sintered PTFE particles tends to increase the porosity of the sintered porous PTFE layer produced.

The unsintered granular-type 7A PTFE will ordinarily have a particle size of between 1 and 300 microns (mean size of about 35 microns). One commercial grade unsintered unmodified granular-type resin is available from the DuPont Company as Teflon 7A as mentioned above. Another grade, having elongated fibrous particles, is available from DuPont with the tradename Teflon 7C.

Unsintered granular PTFE tends to be made of soft particles which can "pack" together to form a fairly strong web when sintered having small pore sizes. For example, Teflon 7A has a tensile strength of 471.4 N/cm$^2$) and a mean pore size of 2.01 micron, when fused into a network.

On the other hand, sintered granular PTFE is composed of hard, substantially noncompactable particles. When baked above the melt temperature, only a weak interparticle connection is obtained and leads to large pore sizes. For example, sintered granular-type PTFE is avilable from the DuPont company under the tradename Teflon 9B. It has a specific strength of 79N/cm$^2$ and a mean pore size of 6.04 micron when ground particles of a 40 micron volume average particle size are fused into a network.

Prior to use, the PTFE grade 9B can be milled to a volume average particle size of about 40 microns by grinding an aqueous slurry thereof between grinding stones at room temperature as follows. The PTFE grade 9B can be mixed with water to form a slurry, and the slurry fed between closely spaced grinding surfaces of a grinding mill as disclosed in U.S. Patent 4,841,623, to crush and shear the pieces of PTFE into particles. The ground slurry is then filtered or centrifuged to separate the granular PTFE particles from water, and the separated finely ground particles oven dried at from 125°C - 150°C.

Unsintered modified fine powder PTFE is available from a number of sources, e.g. the DuPont Company, ICI or Daikin. A modified fine powder PTFE containing hexafluoropropylene comonomer is available from ICI (primary particle size 0.2 to 0.4 microns) as CD509 and modified PTFE containing perfluoro (propyl vinyl ether) is also available. Such modified resins generally contain up to 1% or up to 2% by weight of the modifier.

Where the sintered non-expanded porous PTFE is formed of a mixture of sintered granular-type particles, together with a "softer" unsintered granular-type PTFE, it is believed that the softer material forms rod-like moieties which link the harder sintered particles to provide increased inter-particle connection strengths. Non-expanded PTFE formed solely of hard sintered granular-type PTFE particles tends to have relatively poor strength.

The films and webs so obtained can be used for a variety of purposes. They can be used as webs or rollers for oil supply or as wipers in photocopy equipment, due to the good supply and rate control provided by the small size of the pores of the material. They can be used to filter out particulate; or, when containing absorptive fillers, to filter out gases in gaseous mixtures. Because the material is made of PTFE, it has the good chemical inertness, abrasive resistance and heat degradation resistance associated with ordinary PTFE structures.

### Test Procedures

Gurley Number

[0037] The degree of air flow through the test sample is determined by the Gurley test. In this test, the number of seconds required for 100 cc of air to pass through one square inch of material under a pressure drop of 4.88 inches of water is measured.

Density

Unless otherwise stated, the density of the PTFE is determined by weighing a sample thereof in two different media, viz, air and water at room temperature. Water is a non-wetting medium for PTFE and consequently, the resulting density measurements refer to the porous PTFE. The weights were determined using an Avery VA124 analytical balance. The porous PTFE density is calculated as shown below:

$$\frac{(\text{Weight in Air})(\text{Density of Water at Room Temperature})}{(\text{Weight in Air} - \text{Weight in Water})}$$

Porosity

% Porosity is determined from density measurements in wetting and non-wetting mediums i.e., isopropyl alcohol (IPA) and water respectively, as shown below:

$$\% \text{ Porosity} = \frac{(\text{Density in IPA} - \text{Density in Water})}{(\text{Density in IPA})} \times 100$$

Particle Size

Particle size of the PTFE resins used was determined as follows: using a magnetic stirrer and ultrasonic agitation, 2.5 grams of PTFE powder were dispersed in 60 ml isopropyl alcohol. (Ultrasonic Probe Model W-385, manufactured by Heat Systems-Ultrasonics, Inc.).
Aliquots of 4-6 ml of the dispersed particles were added to approximately 250 ml of circulating isopropyl alcohol in a Leeds & Northrup Microtrac FRA Particle Size Analyzer. Each analysis consisted of three 30-second runs at a sample circulation rate of 2 liters/minute during which light scattering by the dispersed particles is automatically measured and the particle size distribution automatically calculated from the measurements.

Pore Size Measurements (Coulter Porometer).

The pore size of the materials is determined by a Coulter Porometer II which uses a liquid displacement technique. The sample is thoroughly wetted with a liquid of low surface tension and low vapor pressure e.g., Coulter Porofil, such that all the pores have been filled with the liquid. The wetted sample is subjected to increasing pressure, applied by a gas source. As the pressure is increased, the surface tension of the liquid is finally overcome and the liquid is forced out of the pores. By monitoring the gas pressure applied to the sample and the flow of gas through the sample when liquid is expelled, a "wet" run is obtained. The sample is then tested "dry" without liquid in the pores and a "dry" run is obtained. By comparing both "wet" and "dry" runs, the maximum (also called the bubble point), minimum and mean pore size can be calculated by the porometer, using the Washburn equation, shown as follows:

$$Pr = 2\,\gamma\,\text{Cos}\,\theta$$

P = Gas pressure
r = Capillary (or pore) radius
$\gamma$ = Surface tension of wetting liquid
$\theta$ = Contact angle between wetting liquid and pore surface

Tensile Strength

Tensile measurements were carried out according to ASTM D461-87 Part 12 using an Instron 1011 Tensile Test Machine fitted with a 5KN load cell.

**EXAMPLE 1**

Granular blend of two PTFE resins and modified fine powder PTFE (DuPont Grades 7A and 9B).

The following proportions (% volume) of liquid formulations were blended together for 2 minutes using a Silverson mixing head:

> 20.9% carboxymethyl cellulose solution
> 74.5% water
> 3.6% zonyl FSN-100 surfactant solution
> 1.0% triethanolamine

This mixture will be referred to as the "surfactant concentrate." The carboxymethyl cellulose solution was prepared by dissolving carboxymethyl cellulose (which acts as a thickening agent) in water at a 1% (by weight) concentration. The FSN-100 surfactant is a non-ionic perfluoroalkyl ethoxylate mixture. The FSN-100 surfactant solution consisted of a mixture of four parts FSN-100, three parts water and three parts isopropyl alcohol (by weight). The amine is a rust inhibitor.

100 g of ICI coagulated fine powder - CD509, 1.25 kgs of "surfactant concentrate" and 20 g of food coloring dye were blended together for 60 seconds using a Waring blender to form a suspension. The dye is present as a visual aid in determining the surface finish of the spray coat. 450 g of DuPont granular sintered PTFE resin - 9B which had previously been milled to an average particle size of 55 microns was added to the suspension and reblended for a further 60 seconds. 450 g of DuPont granular unsintered PTFE resin - 7A with an average particle size of 35 microns was then added to the suspension which was again reblended for 60 seconds. The resulting aqueous suspension was suitable for spray application. The suspension was sprayed onto a 304L stainless steel mesh (Plain Hollander weave, 50 mesh per inch warp, 250 mesh per inch weft, warp wire diameter 0.140 mm, weft wire diameter 0.112 mm, nominal micron rating 60) using a Binks BBR gun. The spray coated mesh was dried in an oven at 65°C for 1 hour. The temperature was then increased over several hours, up to 350 - 370°C and held at this temperature for up to 3 hours to complete the baking process. After cooling, the resulting film was peeled away from the stainless steel mesh.

The physical properties of this material were compared with those obtained using a sintered unmodified PTFE resin - 9B and an unsintered unmodified PTFE resin - 7A which has been subjected to a similar in-situ sintering stage. The results are shown in the following Table.

TABLE

| Blend (% weight) | Tensile Strength (N/cm$^2$) | Density (g/cm$^3$) | Porosity (%) | Mean Pore (microns) |
|---|---|---|---|---|
| 50% 7A:50% 7B | 205.5 | 1.025 | 53.3 | 2.986 |
| 45% 7A:45% 98:10% CD509 | 313.6 | 1.224 | 41.7 | 3.226 |

It is seen that the fused product containing the modified fine powder PTFE (CD509) had a higher tensile strength and therefore was stronger. It is also seen that the latter product had a larger mean pore diameter, but even so had greater strength.

EXAMPLE 2

Porous PTFE Structures using a blend of Granular (7A unsintered and Fine Powder Resins.

The following properties (% volume) of liquid formulations were blended together for 2 minutes using a Silverson mixing head:

> 20.9% Carboxymethyl cellulose solution
> 62.9% Water
> 7.2% Zonyl FSN-100 surfactant solution
> 9.0% Pluronic L121 surfactant

This mixture is known as the "surfactant concentrate." The carboxymethyl cellulose solution was prepared by dissolving carboxymethyl cellulose (which acts as a thickening agent) in water at a 1% (by weight) concentration. Pluronic (trademark) L121 surfactant is a polyoxyethylene/polyoxypropylene block copolymer. The FSN-100 surfactant is a non-ionic perfluoroalkyl ethoxylate mixture. The FSN-100 surfactant solution consisted of a mixture of four parts FSN-100, three parts water and three parts isopropyl alcohol (by weight).

500 g of ICI coagulated fine powder - CD509, 6 kgs of "surfactant concentrate" and 100 g of triethanolamine were blended together for 3 minutes using a Silverson mixing head, to form a suspension. 4.5 kgs of DuPont granular PTFE resin - 7A with an average particle size of 35 microns was added to the suspension and reblended for a further five minutes. The resulting aqueous suspension was suitable for spray application. The suspension was sprayed onto a 304L stainless steel mesh (Plain Hollander weave, 50 mesh per inch warp, 250 mesh per inch weft, warp wire diameter 0.140 mm, weft wire diameter 0.112 mm, nominal micron rating 60) using a Binks BBR gun. The spray coated mesh was dried in an oven at 65°C for 1 hour. The temperature was then increased over several hours, up to 350 - 370°C and held at this temperature for up to three hours to complete the baking process. After cooling, the resulting film can be peeled away from the stainless steel mesh. Further porous structures were prepared as above but with a different ratio of resins. Test results are as follows:

EXAMPLE 2

| Blend (%) | Tensile Strength (N/cm$^2$) | Mean Pore Size (microns) | Thickness (mm) |
|---|---|---|---|
| 100% 7A | 609.6 | 1.954 | 0.36 |
| 95% 7A:5% CD509 | 681.6 | 2.134 | 0.39 |
| 90% 7A:10% CD509 | 758.6 | 2.285 | 0.36 |

In both instances the greater strength over a product not containing the modified fine powder is evident.

EXAMPLE 3

In this example, several grades of modified fine powder PTFE resins were used to prepare fused products of the invention in which the granular PTFE resin was DuPont's sintered Grade 9B. The ratio of granular to modified fine powder was 90% granular, 10% modified fine powder.

The preparations were carried out substantially as described in the previous examples. The modified fine powders used are identified as CD Grade resins. Results are shown as follows:

| CD Grade | Comonomer | Specific Strength (N/cm$^2$) | % Porosity | Mean Pore Size | Thickness (mm) |
|---|---|---|---|---|---|
| CD509 | Yes | 220.7 (6.5) | 58.8 | 6.906 | 0.81 (0.02) |
| CD076 | Yes | 221.2 (8.9) | 59.1 | 6.906 | 0.81 (0.03) |
| CD086 | Yes | 234.9 (6.3) | 57.0 | 6.046 | 0.77 (0.04) |
| CD090 | Yes | 218.5 (2.6) | 60.4 | 7.703 | 0.86 (0.01) |
| CD509 and 076 contain units of HFP comonomer. CD086 contains units of PPVE comonomer. CD090 contains both units of HFP and PPVE. | | | | | |

When unmodified fine powder PTFE resin was used, in general, strength was not as great, as seen following:

| CD Grade | Comonomer | Specific Strength (N/cm$^2$) | % Porosity | Mean Pore Size | Thickness (mm) |
|---|---|---|---|---|---|
| CD1 | No | 177.4 (5.0) | 58.7 | 6.156 | 0.91 (0.02) |
| CD4 | No | 195.3 (6.9) | 57.8 | 6.480 | 0.94 (0.02) |
| CD123 | No | 98.4 (5.4) | 62.1 | 7.093 | 0.89 (0.03) |

**Claims**

1. A porous material formed of particles of a non-melt-processible granular PTFE and particles of modified nonmelt processible fine powder PTFE copolymer wherein the comonomer units compose less than 2% by weight of the copolymer, and wherein the particles are fused together to form a network of fused particles in which the network defines a tortuous path of interconnected voids between the fused interconnected particles.

2. The material of Claim 1 in the form of a sheet.

3. The material of Claim 1 or 2 wherein the comonomer units are derived from a fluorinated organic monomer.

4. The material of Claim 1 or 2 wherein the comonomer units are derived from hexafluoroethylene or perfluoropropyl vinyl ether.

5. The material of any preceeding clan wherein the granular PTFE particles include modified granular PTFE particles which comprise a modifying comonomer.

6. An aqueous dispersion of particles of a non-melt-processible granular PTFE and particles of a modified non-melt-processible fine powder PTFE copolymer wherein the comonomer units compose less than 2% by weight of the copolymer.

7. The dispersion of Claim 6 wherein the comonomer units are derived from a fluorinated organic monomer.

8. The dispersion of Claim 6 wherein the comonomer units are derived from hexafluoroethylene or perfluoropropyl vinyl ether.

9. The dispersion of Claim 6 wherein the particles of non-melt-processible granular PTFE consist essentially of a mixture of sintered and unsintered particles.

10. The dispersion of Claim 9 wherein the sintered particles have an average size greater than that of the unsintered particles.

11. Process for forming a porous PTFE material which comprises:

    (a) forming an aqueous dispersion of particles of a non-melt-processible granular PTFE and particles of a modified non-melt-processible fine powder PTFE copolymer in which the comonomer units compose less than 2% by weight of the copolymer;
    (b) forming said dispersion into a coating on a substrate;
    (c) drying the coating; and
    (d) heating the coating to fuse together the particles to form a network of fused particles in which the network defines a tortuous path of interconnected voids between the fused interconnected particles.

**Patentansprüche**

1. Poröses Material, gebildet aus Partikeln eines nicht-schmelz-verarbeitbaren körnigen PTFE und Partikeln eines modifizierten nicht-schmelz-verarbeitbaren Feinpulver-PTFE-Copolymers, wobei die Comonomer-Einheiten weniger als 2 Gew.-% des Copolymers ausmachen, und wobei die Partikel zur Schaffung eines Netzwerks aus angeschmolzenen Partikeln zusammengeschmolzen werden, wobei das Netzwerk einen verschlungenen Pfad untereinander verbundener Hohlräume zwischen den verschmolzenen untereinander verbundenen Partikeln bildet.

2. Material nach Anspruch 1 in Form eines Flachstücks.

3. Material nach Anspruch 1 oder 2, bei dem die Comonomer-Einheiten von einem fluorierten organischen Monomer abgeleitet sind.

4. Material nach Anspruch 1 oder 2, bei dem die Comonomer-Einheiten von Hexafluorethylen oder Perfluoropropylvinylether abgeleitet sind.

**5.** Material nach einem vorhergehenden Anspruch, bei dem die körnigen PTFE-Partikel modifizierte körnige PTFE-Partikel enthalten, die ein modifizierendes Comonomer aufweisen.

**6.** Flüssige Dispersion von Partikeln eines nicht-schmelz-verarbeitbaren körnigen PTFE und Partikeln eines modifizierten nicht-schmelz-verarbeitbaren Feinpulver-PTFE-Copolymers, bei dem die Comonomer-Einheiten weniger als 2 Gew.-% des Copolymers ausmachen.

**7.** Dispersion nach Anspruch 6, bei der die Comonomer-Einheiten von einem fluorierten organischen Monomer abgeleitet sind.

**8.** Dispersion nach Anspruch 6, bei dem die Comonomer-Einheiten von Hexafluorethylen oder Perfluoropropylvinylether abgeleitet sind.

**9.** Dispersion nach Anspruch 6, bei der die Partikel des nicht-schmelz-verarbeitbaren körnigen PTFE im wesentlichen aus einem Gemisch aus gesinterten und ungesinterten Partikeln bestehen.

**10.** Dispersion nach Anspruch 9, bei der die gesinterten Partikel eine durchschnittliche Größe aufweisen, die diejenige der ungesinterten Partikel übersteigt.

**11.** Verfahren zum Bilden eines porösen PTFE-Materials, umfassend:

(a) Bilden einer wässrigen Dispersion aus Partikeln eines nicht-schmelz-verarbeitbaren körnigen PTFE und Partikeln eines modifizierten, nicht-schmelz-verarbeitbaren Feinpulver-PTFE-Copolymers, indem die Comonomer-Einheiten weniger als 2 Gew.-% des Copolymers ausmachen;

(b) Ausbilden der Dispersion zu einem Überzug auf einem Substrat;

(c) Trocknen des Überzugs; und

(d) Erhitzen des Überzugs, um die Partikel unter Bildung eines Netzwerks geschmolzener Partikel zusammenzuschmelzen, wobei das Netzwerk einen verschlungenen Pfad untereinander verbundener Hohlräume zwischen den geschmolzenen untereinander verbundenen Partikeln bildet.

**Revendications**

**1.** Matière poreuse composée de particules d'un polytétrafluoréthylène (PTFE) granulaire ne pouvant être traité par fusion et de particules de copolymère de PTFE ne pouvant être traité par fusion modifié sous forme de poudre fine, dans laquelle les motifs comonomères représentent moins de 2 % en poids du copolymère, et dans laquelle les particules sont fusionnées ensemble pour former un réseau de particules fusionnées dans lequel le réseau définit un trajet sinueux de vides reliés les uns aux autres entre les particules fusionnées reliées les unes aux autres.

**2.** Matière selon la revendication 1 sous la forme d'une feuille.

**3.** Matière selon la revendication 1 ou 2, dans laquelle les motifs comonomères sont dérivés d'un monomère organique fluoré.

**4.** Matière selon la revendication 1 ou 2, dans laquelle les motifs comonomères sont dérivés de l'hexafluoréthylène ou du perfluoropropylvinyléther.

**5.** Matière selon l'une quelconque des revendications précédentes, dans laquelle les particules de PTFE granulaire comprennent des particules de PTFE granulaire modifié qui comprennent un comonomère de modification.

**6.** Dispersion aqueuse de particules d'un PTFE granulaire ne pouvant être traité par fusion et de particules d'un copolymère de PTFE ne pouvant être traité par fusion modifié sous forme de poudre fine dans laquelle les motifs comonomères représentent moins de 2 % en poids du copolymère.

**7.** Dispersion selon la revendication 6, dans laquelle les motifs comonomères sont dérivés d'un monomère organique fluoré.

8. Dispersion selon la revendication 6, dans laquelle les motifs comonomères sont dérivés de l'hexafluoréthylène ou du perfluoropropylvinyléther.

9. Dispersion selon la revendication 6, dans laquelle les particules de PTFE granulaire ne pouvant être traité par fusion se composent essentiellement d'un mélange de particules frittées et non frittées.

10. Dispersion selon la revendication 9, dans laquelle les particules frittées présentent une taille moyenne supérieure à celle des particules non frittées.

11. Procédé pour préparer une matière poreuse à base de PTFE qui comprend :

(a) la formation d'une dispersion aqueuse de particules d'un PTFE ne pouvant être traité par fusion granulaire et de particules d'un copolymère de PTFE modifié sous forme de poudre fine ne pouvant être traité par fusion dans lequel les motifs comonomères représentent moins de 2 % en poids du copolymère ;

(b) la formation de ladite dispersion en un revêtement sur un substrat;

(c) le séchage du revêtement ; et

(d) le chauffage du revêtement pour fusionner les particules les unes avec les autres pour former un réseau de particules fusionnées dans lequel le réseau définit un trajet sinueux de vides reliés les uns aux autres entre les particules fusionnées reliées les unes aux autres.